# EUROPÄISCHE PATENTSCHRIFT

(11) **EP 0 578 314 B1**
(45) Veröffentlichungstag und Bekanntmachung des Hinweises auf die Patenterteilung: **20.03.1996**
(21) Anmeldenummer: 93201926.8
(22) Anmeldetag: 01.07.1993
(51) Int. Cl.: H01J 35/10, F16C 33/10

(54) **Gleitlager für eine Drehanoden-Röntgenröhre**
Sliding bearing for rotating-anode X-ray tube
Palier à contact lisse pour tube à rayons X à anode tournante

(30) Priorität: 07.07.1992 DE 4222225
(43) Veröffentlichungstag der Anmeldung: 12.01.1994
(73) Patentinhaber: Philips Patentverwaltung GmbH, D-22335 Hamburg (DE); Philips Electronics N.V., NL-5621 BA Eindhoven (NL)
(72) Erfinder: Vetter, Axel, c/o Philips Patentverwaltung GMBH, D-20097 Hamburg (DE); Tielemans, L.P.M., Philips Patentverwaltung GMBH, D-20097 Hamburg (DE)
(74) Vertreter: Hartmann, Heinrich, Dipl.-Ing.

(56) Entgegenhaltungen:
- EP-A- 0 204 359
- DE-A- 3 930 573
- GB-A- 1 144 131

## Beschreibung

Die Erfindung betrifft ein Gleitlager für eine Drehanoden-Röntgenröhre, von dessen relativ zueinander in einer Drehrichtung drehbaren Lagerflächen wenigstens eine mit einem Muster von Rillen versehen ist.

Ein solches Gleitlager ist bekannt, beispielsweise aus der EP-OS 378 274 oder aus der DE-OS 28 52 908. Diese Gleitlager können nur in einer bestimmten Drehrichtung betrieben werden. Zwischen den relativ zueinander drehbaren Lagerflächen befindet sich ein flüssiges Schmiermittel, beispielsweise eine Galliumlegierung.

Im stationären Betrieb des Gleitlagers in der vorgesehenen Drehrichtung ergeben sich unter Mitwirkung des Rillenmusters solche Druckverhältnisse in dem Schmiermittel, daß sich ein hydrodynamischer Schmierfilm ausbildet und daß sich die Lagerflächen nicht berühren können. Zu Beginn und am Ende der Rotation sind diese Bedingungen jedoch nicht erfüllt, so daß sich Verschleißerscheinungen einstellen können, die die Lebensdauer der Lager begrenzen.

Aufgabe der vorliegenden Erfindung ist es, ein Gleitlager der eingangs geannnten Art so auszugestalten, daß sich eine längere Lebensdauer ergibt. Diese Aufgabe wird erfindungsgemäß dadurch gelöst, daß die Rillen in ihrem in Drehrichtung hintersten Teil mit einer Vertiefung versehen sind.

Der Erfindung liegt die Beobachtung zugrunde, daß sich bei den Start- und Lande-Prozessen aus den Lagerflächen Partikel lösen, die im folgenden auch als Abrieb bezeichnet werden. Der Abrieb sammelt sich an den Stellen der Rillen, in denen sich bei rotierendem Lager im Schmiermittel der höchste Druck ergibt. Dies ist der in Drehrichtung hinterste Teil des Lagers. Im Laufe der Zeit kann sich in diesem Teil der Rillen soviel Abrieb sammeln und zusammenpressen, daß sich dort ein stärkerer Verschleiß mit einem nachfolgenden Lagerausfall ergeben kann.

Durch die Anbringung einer Vertiefung der Rillen in diesem Bereich kann dort erheblich mehr Abrieb aufgenommen und dadurch die Lebensdauer des Lagers verlängert werden. Die Vertiefung in einem zu der gesamten Länge der Rillen Kleinen Bereich beeinträchtigt die Tragfähigkeit des Lagers nur unwesentlich und kann bei der Konstruktion von vorne herein berücksichtigt werden. Die Vertiefung soll nur die Rillen betreffen, nicht aber die Stege zwischen den Rillen.

Es sei an dieser Stelle erwähnt, daß aus der EP-OS 204 359 bereits ein Gleitlager mit einem Rillenmuster bekannt ist, bei dem die Tiefe der Rillen variiert. Es handelt sich dabei um ein Gleitlager für eine horizontal verlaufende Welle, die in einer Lagerbuchse gelagert ist. Die Rillentiefe variiert dabei in Umfangsrichtung kontinuierlich derart, daß dort, wo das Lager der stärksten Belastung ausgesetzt ist, die Rillen ihre geringste Tiefe haben. Deshalb entfaltet das Lager dort seine größte Tragfähigkeit. Eine Verlängerung der Lebensdauer eines solchen Lagers wird dabei weder angestrebt, noch wird sie durch die angegebenen Maßnahmen erreicht.

Eine Ausgestaltung der Erfindung sieht vor, daß eine der Lagerflächen ein Muster von Rillen in zwei aneinander grenzenden Bereichen aufweist, wobei die Rillen in dem einen Bereich auf die Rillen in dem anderen Bereich unter einem von 180° verschiedenen - vorzugsweise spitzen - Winkel zulaufen und an der Grenze zwischen den Bereichen enden, und daß in dem grenznahen Ende der Rillen eine Vertiefung vorgesehen ist.

Eine andere Ausgestaltung der Erfindung sieht demgegenüber vor, daß eine der Lagerflächen mit einem sich in Richtung senkrecht zur Drehachse erstreckenden Muster von in Drehrichtung außen beginnenden und innen endenden Rillen versehen ist und daß die inneren Enden der Rillen in eine ring- oder kreisförmige Vertiefung münden. In diesem Fall liegt der in Drehrichtung jeweils hintere Teil der Rillen an ihrem inneren Ende, weshalb dort die Vertiefung vorhanden sein muß.

Die Erfindung wird nachstehend anhand der Zeichnungen näher erläutert. Es zeigen
- Fig. 1: eine Röntgenröhre mit erfindungsgemäßen Gleitlagern,
- Fig. 2: ein Gleitlager zur Aufnahme radialer Kräfte in einer Seitenansicht und im Querschnitt,
- Fig. 3: eine erste Ausführungsform eines Gleitlagers zur Aufnahme axialer Kräfte in Draufsicht und im Querschnitt
- Fig. 4: eine weitere Ausführungsform eines Gleitlagers zur Aufnahme axialer Kräfte in der Draufsicht und im Querschnitt.

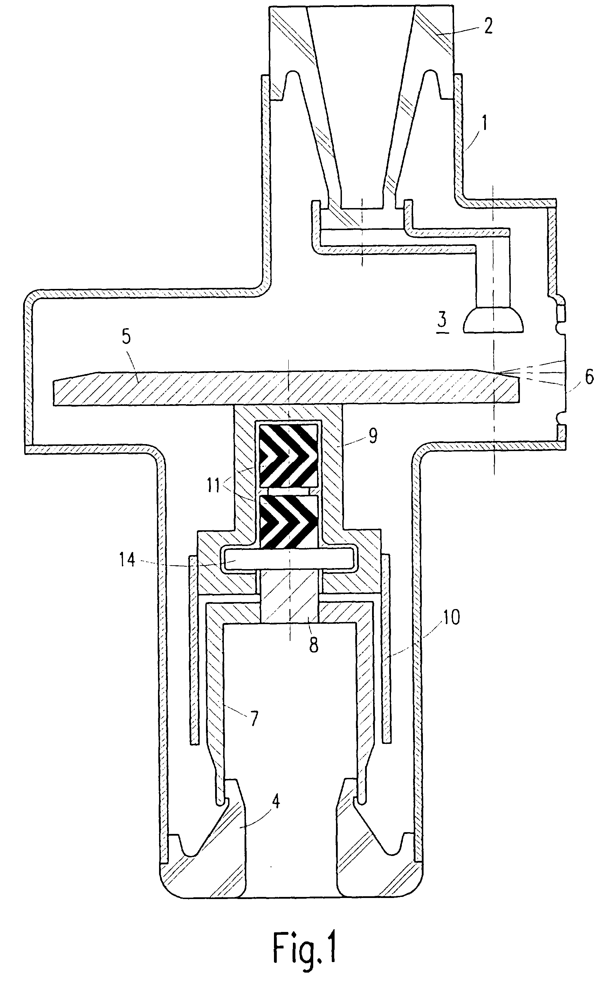

Die in Fig. 1 dargestellte Drehanoden-Röntgenröhre besitzt einen Metallkolben 1, an dem über einen ersten Isolator 2 die Kathode 3 und über einen zweiten Isolator 4 die Drehanode befestigt ist. Die Drehanode umfaßt eine Anodenscheibe 5 auf deren der Kathode 3 gegenüberliegenden Fläche beim Einschalten einer Hochspannung Röntgenstrahlung erzeugt wird. Die Röntgenstrahlung kann durch ein Strahlenaustrittsfenster 6 im Kolben, das vorzugsweise aus Beryllium besteht, austreten. Die Anodenscheibe 5 ist über eine Lageranordnung mit einem Trägerkörper 7 verbunden, der an dem zweiten Isolator 4 befestigt ist. Die Lageranordnung umfaßt eine fest mit dem Trägerkörper 7 verbundene Lagerachse 8 und eine die Lagerachse 8 konzentrisch umschließende Lagerschale 9, die an ihrem unteren Ende einen Rotor zum Antrieb der am oberen Ende befestigten Anodenscheibe 5 aufweist. Die Lagerachse 8 und die Lagerschale 9 bestehen aus einer Molybdänlegierung (TZM). Stattdessen kann aber auch Molybdän oder eine Wolfram-Molybdän-Legierung verwendet werden.

An ihrem oberen Ende ist die Lagerachse 8 mit zwei in axialer Richtung gegeneinander versetzten fischgrätartigen Rillenmustern 11 zur Aufnahme radialer Kräfte versehen. Der zylindermantelförmige Spalt zwischen den Rillenmustern 11 und der Lagerschale 9 ist mit einem flüssigen Schmiermittel gefüllt, vorzugsweise einer Galliumlegierung. Die Breite des Spaltes entspricht beispielsweise der Tiefe der Rillen und kann in der Praxis zwischen 10 µm und 30µm liegen. Wenn die Drehanode in der vorgeschriebenen Drehrichtung rotiert, wird das Schmiermittel in den Bereich des Rillenmusters transportiert, in dem die Rillen paarweise zusammenlaufen. Hier baut sich in dem Schmiermittel ein Druck auf, der radial auf das Lager wirkende Kräfte aufnehmen kann.

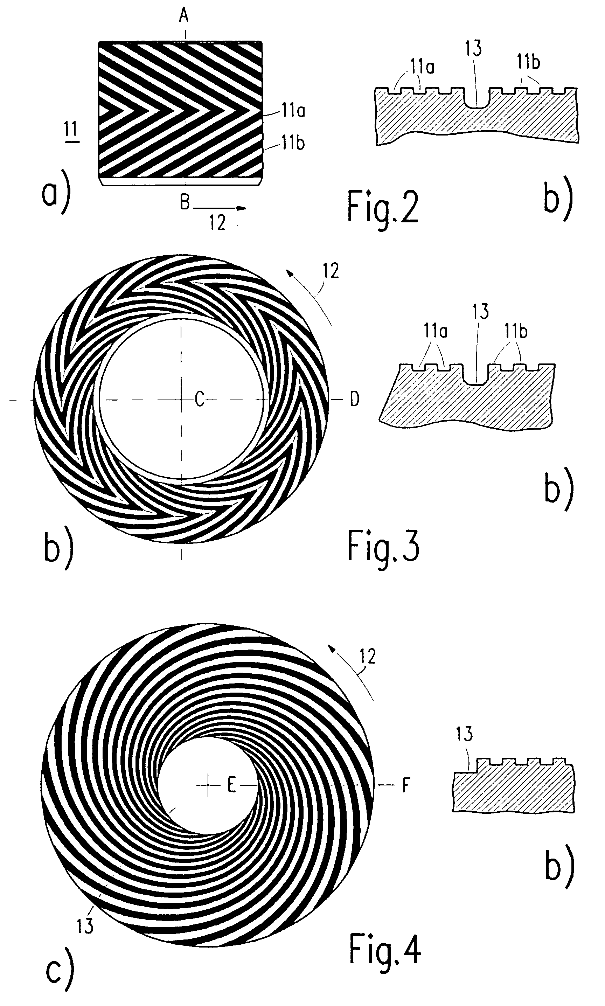

Fig. 2a zeigt einen Teil einer Abwicklung der Lagerachse 8 im Bereich eines der Rillenmuster 11. Die Rillen 11a sind schwarz dargestellt und die dazwischen liegenden Stege 11b weiß. Die Rillen und die Stege haben zumindest annähernd die gleiche Breite, die zwischen 0,1 und 1 mm liegen kann. Die Tiefe der Rillen sowie die Breite des Spaltes zwischen dem Rillenmuster und der Lagerschale 9 bestimmen zusammen mit anderen Parametern die Tragfähigkeit des Lagers (je kleiner diese Abmessungen sind, desto größer ist die Tragfähigkeit). Das Rillenmuster besteht aus Paaren von helixförmigen Rillen, die in einem spitzen Winkel aufeinander zulaufen und dort enden, wo sie zusammentreffen. In diesem Bereich ergibt sich der höchste Schmiermitteldruck, wenn sich die Lagerschale 9 relativ zum Rillenmuster in Richtung des Pfeiles 12 bewegt. Hierhin wird das Schmiermittel gepumpt und hier setzt sich auch der im Laufe des Betriebes des Gleitlagers entstehene Abrieb ab. Deshalb ist in diesem Bereich des Rillenmusters eine Vertiefung 13 angebracht, wie in Fig. 2b dargestellt ist.

Fig. 2b zeigt einen Querschnitt durch die Oberfläche des Rillenmusters längs der Linien A - B, wobei der Einfachheit halber weniger Rillen dargestellt sind, diese jedoch im Vergleich zu ihrer Breite eine wesentlich größere Tiefe aufweisen als in Wirklichkeit. Die Vertiefung 13 in der Mitte des Rillenmusters, also jeweils in dem Bereich, wo die beiden Rillen eines Paares zusammentreffen bzw. enden, ist etwa zwei- bis dreimal so groß wie die Rillentiefe außerhalb dieses Bereichs. Die Abmessungen der Vertiefung 13 in Längsrichtung der Rillen sollen das Zwei- bis Dreifache der Rillenbreite betragen. Da die Vertiefungen sich somit insgesamt nur über einen kleinen Teil der Gesamtlänge der Rillen erstrecken, wird die Tragfähigkeit des Lagers nur unwesentlich beeinträchtigt. Wenn die Tragfähigkeit des Lagers von vornherein groß dimensioniert wurde, kann die Vertiefung in Längsrichtung auch größer sein.

Mit der Vertiefung 13 kann der Endbereich der Rillen wesentlich mehr Abrieb aufnehmen, so daß es wesentlich länger dauert, bis dieser Bereich mit Abrieb zugesetzt wird. Die Lebensdauer des Lagers verlängert sich dadurch entsprechend.

Die Herstellung der Vertiefungen 13 ist relativ einfach, wenn die Rillen mit Hilfe eines Lasers in die Achse 8 geschnitten werden, wie in der deutschen Patentanmeldung P 42 06 002.8 beschrieben. Es muß dabei lediglich in diesem Bereich die Schnittleistung des Lasers erhöht oder die Vorschubgeschwindigkeit des Laserstrahls relativ zur Achse 8 verringert werden.

Im Anschluß an den mit Rillenmustern 11 für die radiale Lagerung versehenen Bereich hat die Achse 8 einen mehrere mm dicken Abschnitt 14, dessen Durchmesser wesentlich größer ist als der Durchmesser des übrigen Teils der Lagerachse 8. Darunter folgt wiederum ein Abschnitt, dessen Durchmesser zumindest annähernd dem Durchmesser der Lagerachse 8 im oberen Bereich entspricht und der mit dem Trägerkörper 7 verbunden ist. Die Innenkontur der Lagerschale 9 ist dem Abschnitt 14 angepaßt. Die Lagerschale 9 muß in diesem Bereich mindestens zweiteilig ausgebildet sein, wobei die beiden Teile so miteinander verbunden sein müssen, daß Schmiermittel nicht austreten kann.

Die freien Stirnflächen auf der Ober- und auf der Unterseite des Abschnitts 14 sind mit Rillenmustern versehen, wodurch weitere Gleitlager gebildet werden, die der Aufnahme von in axialer Richtung verlaufenden Lagerkräften dienen.

Fig. 3a zeigt ein solches Rillenmuster in der Draufsicht, wobei der Pfeil 12 die Umlaufrichtung der Lagerschale relativ zu dem Rillenmuster angibt. Das Rillenmuster setzt sich aus aus Paaren von aufeinander zulaufenden Rillen zusammen. Allerdings verlaufen diese Rillen nicht geradlinig, sondern vorzugsweise entsprechend den Bogenstücken von zwei (logarithmischen) Spiralen mit entgegengesetztem Umlaufsinn. Auch bei diesem Lager wird das Schmiermittel und der Abrieb in den Bereich gerückt, in den die Rillen eines Paares zusammenlaufen. Gemäß Fig. 3b, die die Oberfläche eines Querschnitts durch Fig. 3a entlang der Linie C - D darstellt, findet sich in diesem Bereich eine Vertiefung 13, deren Herstellung und Wirkung die gleiche ist, wie in Verbindung mit Fig. 2 beschrieben.

Die in den Fig. 2 und 3 dargestellten Lagerflächen haben gemeinsam, daß sie in zwei aneinander grenzenden Bereichen Rillen aufweisen, die unter einem spitzen Winkel auf die Rillen im jeweils anderen Bereich zulaufen und mit einer von diesen gemeinsam enden. Die Rillen in den Bereichen können jedoch - wenn sie in Umfangsrichtung gegeneinander versetzt sind - auch an den Grenzen zwischen den Bereichen enden, ohne in eine der Rillen des anderen Bereiches einzumünden. Auch in diesem Fall muß die Vertiefung an dem grenzenznahen Ende der Rillen vorgesehen sein.

In Fig. 4 ist eine andere Ausführungsform eines für ein Gleitlager zur Aufnahme axialer Lagerkräfte geeigneten Rillenmusters dargestellt. Ein solches Rillenmuster könnte beispielsweise auf der oberen Stirnfläche der Lagerachse 8 vorgesehen sein. Ebenso wie das in Fig. 3 dargestellte Rillenmuster bedeckt das Rillenmuster nach Fig. 4a einen ringförmigen Bereich um die Rotationsachse. Während die Rillen bei Fig. 3 jedoch die Bogenstücke zweier Spiralen bilden, die mit unterschiedlichem Umlaufsinn um die Rotationsachse verlaufen, werden bei der in Fig. 4 dargestellten Ausführungsform nur Bogenstücke von logarithmischen Spiralen benutzt die das Rotationszentrum im gleichen Sinn (Uhrzeigersinn) umlaufen. Der Pfeil 12 gibt wiederum die Bewegungsrichtung 12 der Lagerschale relativ zu dem Rillenmuster an, bei dem dieses seine Tragkraft entfaltet. Dabei wird das Schmiermittel und der Abrieb in den Rillen nach innen gepumpt, wobei sich am inneren Ende der größte Schmiermitteldruck ergibt und die Partikel absetzen können. Zur Verlängerung könnte an diesem in Drehrichtung hintersten Teil einer jeden Rille eine Vertiefung vorgesehen sein.

Wie sich jedoch aus Fig. 4b ergibt, die einen Querschnitt der Oberfläche von Fig. 4a längs der Linien E und F darstellt, münden alle Rillen gemeinsam in einen kreisförmigen, vertieften Bereich 13, was die Herstellung vereinfacht. Anstelle einer den gesamten Innenbereich ausfüllenden kreisförmigen Vertiefung 13 kann auch eine ringförmige Vertiefung vorgesehen sein, in die die Rillen münden.

Bei den zuvor besprochenen Lagern befindet sich das Rillenmuster jeweils auf einer feststehenden Lagerfläche; jedoch kann das Rillenmuster auch auf einer im Betriebszustand rotierenden Lagerfläche angeordnet sein. Auch in diesem Fall muß die Vertiefung am jeweils hintersten Teil der Rille vorgesehen sein, d.h. an dem Teil der Rille, der als letzter einen definierten Punkt oder Radialstrahl in der anderen Lagerfläche passiert.

## Patentansprüche

1. Gleitlager für eine Drehanoden-Röntgenröhre, von dessen relativ zueinander in einer Drehrichtung drehbaren Lagerflächen wenigstens eine mit einem Muster von Rillen versehen ist,
dadurch gekennzeichnet, daß die Rillen in ihrem in Drehrichtung hintersten Teil mit einer Vertiefung versehen sind.

2. Gleitlager nach Anspruch 1,
dadurch gekennzeichnet, daß eine der Lagerflächen ein Muster von Rillen in zwei aneinander grenzenden Bereichen aufweist, wobei die Rillen in dem einen Bereich auf die Rillen in dem anderen Bereich unter einem von 180° verschiedenen - vorzugsweise spitzen - Winkel zulaufen und an der Grenze zwischen den Bereichen enden, und daß in dem grenznahen Ende der Rillen eine Vertiefung vorgesehen ist.

3. Gleitlager nach Anspruch 1,
dadurch gekennzeichnet, daß eine der Lagerflächen mit einem sich in Richtung senkrecht zur Drehachse erstreckenden Muster von in Drehrichtung außen beginnenden und innen endenden Rillen versehen ist und daß die inneren Enden der Rillen in eine ring- oder kreisförmige Vertiefung münden.

4. Gleitlager nach einem der vorhergehenden Ansprüche,
dadurch gekennzeichnet, daß die Tiefe der Vertiefung ungefähr zweimal so groß ist wie die Tiefe der Rillen.

5. Gleitlager nach einem der vorhergehenden Ansprüche,
dadurch gekennzeichnet, daß die Vertiefungen sich in Längsrichtung der Rillen um das zwei- bis dreifache der Rillenbreite erstrecken.

6. Röntgenröhre mit einem Gleitlager nach einem der vorhergehenden Ansprüche.

## Claims

1. A sleeve bearing for a rotary-anode X-ray tube, at least one of the bearing faces of which, being rotatable relative to one another in a direction of rotation, is provided with a pattern of grooves, characterized in that a recess is provided at the rearmost end of the grooves, viewed in the direction of rotation.

2. A sleeve bearing as claimed in Claim 1, characterized in that one of the bearing faces is provided with a groove pattern in two adjoining areas, the grooves in one area extending towards the grooves in the other area at an angle which deviates from 180° and which is preferably an acute angle, said grooves terminating at the boundary between the areas and a recess being provided in the grooves at their end near the boundary.

3. A sleeve bearing as claimed in Claim 1, characterized in that one of the bearing faces is provided with a pattern of grooves which extends in the direction perpendicular to the axis of rotation, which grooves start at the outer side and terminate at the inner side, viewed in the direction of rotation, the inner ends of the grooves opening into a ring-shaped or circular recess.

4. A sleeve bearing as claimed in any one of the preceding Claims, characterized in that the depth of the recess amounts to approximately twice the depth of the grooves.

5. A sleeve bearing as claimed in any one of the preceding Claims, characterized in that the recesses extend in the longitudinal direction of the grooves over a distance equal to from two to three times the groove width.

6. An X-ray tube comprising a sleeve bearing as claimed in any one of the preceding Claims.

## Revendications

1. Palier lisse pour un tube à rayons X à anode tournante, dont au moins l'une des surfaces de palier, tournant l'une par rapport à l'autre dans un sens de rotation, est pourvue d'un motif de rainures, caractérisé en ce que les rainures sont pourvues d'un renfoncement dans leur partie postérieure dans le sens de rotation.

2. Palier lisse selon la revendication 1, caractérisé en ce que l'une des surfaces du palier présente un motif de rainures dans deux zones limitrophes, les rainures de la première zone convergeant sur les rainures de l'autre zone sous un angle, de préférence aigu, différent de 180° et se terminant à la limite entre les zones, et en ce qu'il est prévu un renfoncement à l'extrémité des rainures proche de la limite.

3. Palier lisse selon la revendication 1, caractérisé en ce que l'une des surfaces du palier est pourvue d'un motif, s'étendant dans la direction perpendiculaire à l'axe de rotation, de rainures débutant à l'extérieur et se terminant à l'intérieur dans le sens de rotation et en ce que les extrémités internes des rainures débouchent dans un renfoncement de forme annulaire ou circulaire.

4. Palier lisse selon l'une quelconque des revendications précédentes, caractérisé en ce que la profondeur du renfoncement vaut à peu près le double de celle des rainures.

5. Palier lisse selon l'une quelconque des revendications précédentes, caractérisé en ce que les renfoncements s'étendent dans la direction longitudinale des rainures sur deux ou trois fois la largeur des rainures.

6. Tube à rayons X comportant un palier lisse selon l'une quelconque des revendications précédentes.
